# EUROPÄISCHE PATENTSCHRIFT

(11) **EP 0 610 711 B1**
(45) Veröffentlichungstag und Bekanntmachung des Hinweises auf die Patenterteilung: **12.08.1998**
(21) Anmeldenummer: 94101008.4
(22) Anmeldetag: 25.01.1994
(51) Int. Cl.: G05B 23/02

(54) **Elektronische Steuervorrichtung für einen elektromotorischen Antrieb, insbesondere Garagentorantrieb**
Electronic device for the control of an electrical motor device, in particular a device for a garage door
Dispositif électronique pour le pilotage d'un dispositif moteur électrique, en particulier un dispositif moteur pour porte de garage

(30) Priorität: 12.02.1993 DE 4304215
(43) Veröffentlichungstag der Anmeldung: 17.08.1994
(73) Patentinhaber: ROBERT BOSCH GMBH, 70442 Stuttgart (DE)
(72) Erfinder: Buehner, Peter, Dipl.-Ing., D-71696 Möglingen (DE); Siegwart, Bernhard, Dipl.-Ing., D-71679 Asperg (DE); Spaeth, Matthias, Dipl.-Ing., D-71696 Möglingen (DE)

(56) Entgegenhaltungen:
- EP-A- 0 152 770
- EP-A- 0 390 376
- EP-A- 0 468 361
- WO-A-90/03602
- DE-A- 3 447 449
- US-A- 4 831 511
- PATENT ABSTRACTS OF JAPAN vol. 10, no. 127 (P-455) 13. Mai 1986 & JP-A-60 252 905 (MITSUBISHI) 13. Dezember 1985
- PATENT ABSTRACTS OF JAPAN vol. 11, no. 26 (P-539) (2473) 24. Januar 1987 & JP-A-61 196 304 (NEC HOME ELECTRONICS LTD.) 30. August 1986

## Beschreibung

### Stand der Technik

Die Erfindung betrifft eine elektronische Steuervorrichtung für einen elektromotorischen Antrieb, insbesondere Garagentorantrieb, nach der Gattung des Anspruchs 1.

Bei Garagentorantrieben, jedoch auch bei anderen elektromotorischen Antrieben für Türen, Fenster, Maschinen, Flurfördergeräte oder dergleichen, sind in bekannter Weise Sicherheitseinrichtungen vorgesehen, die die Gefährdung von im Bewegungsbereich befindlichen Personen oder Gegenständen verhindern sollen. Derartige Sicherheitseinrichtungen sind zum Beispiel Lichtschranken, Bewegungsmelder, Ultraschallgeräte, Schaltkontakte, Endschalter und Motorstrom-Überwachungseinrichtungen, Aus der EP-A-O 0 468 361 ist beispielsweise ein derartiges Motorstrom-Überwachungssystem bei einer Torsteuerung bekannt. Trifft das sich bewegende Tor auf ein Hindernis oder erreicht es eine seiner beiden Endstellungen, so steigt der Motorstrom infolge der erhöhten Belastung an. Bei Überschreitung eines festgelegten Motorstromwerts wird der Elektromotor abgeschaltet. Eine derartige Abschaltung erfolgt beispielsweise auch, wenn bei anderen bekannten Einrichtungen ein Gegenstand eine Sicherheitslichtschranke unterbricht.

Aus der JP-A-60 252 905 ist die Überwachung einer mit einem Mikroprozessor verbundenen elektrischen Schaltung bekannt, bei der die Spannungsversorgung einer Relaisspule mittels eines Optokopplers überwacht wird. Ein elektromotorischer Antrieb, dessen Einschaltsignale überwacht werden, ist nicht beschrieben.

Die WO-A-90 036 002 beschreibt ein Kontrollsystem mit einem Mikroprozessor, wobei die Selbsttesteinrichtung über die Frequenz einer "Watchdog"-Schaltung gesteuert wird. Die bekannte Selbsttesteinrichtung dient der Überwachung der Bremsanlage eines Kraftfahrzeuges, insbesondere der Überwachung elektromagnetisch gesteuerter Ventile der Bremsanlage, eine Übertragung der beschriebenen Maßnahmen auf einen elektromotorischen Antrieb ist nicht beschrieben und ohne wesentliche Änderungen und Ergänzungen nicht möglich. Schließlich ist aus der EP-A-0 152 717 eine überwachte Regeleinrichtung und/oder Steuereinrichtung für ein Gerät bekannt, dessen Ausgangsleistung zur Vermeidung sicherheitsgefährdenter Wirkungen überwacht wird. Eine Testschaltung zur Überprüfung der Regel- und/oder Steuereinrichtung ist von dieser sowohl funktionell als auch baulich getrennt. Während die Regel- und/oder Steuereinrichtung mit herkömmlichen diskreten Bauelementen aufgebaut ist, arbeitet die hiervon vollständig getrennte Testeinrichtung mit einem Mikroprozessor, welcher die bekannten elektrischen Werte der einzelnen diskreten Bauelemente überwacht.

Die bekannten Sicherheitseinrichtungen dienen zwar der Verringerung einer Gefährdung von Personen und Sachen, jedoch nur bei störungsfreiem Betrieb und einwandfreiem Zustand aller Komponenten. Tritt ein Defekt auf, der die Funktion einer oder mehrerer Sicherheitseinrichtungen blockiert oder der zu unkontrollierten Bewegungen des elektromotorischen Antriebs führen kann, so wird dieser häufig erst dann bemerkt, wenn er zu einem Unfall oder zu einer Beschädigung einer Person oder einer Sache durch den Antrieb geführt hat.

### Vorteile der Erfindung

Die erfindungsgemäße Steuervorrichtung mit den kennzeichnenden Merkmalen des Hauptanspruchs hat den Vorteil, daß die sicherheitsrelevanten Teile der Antriebssteuerung einem Selbsttest unterzogen werden, wobei ein Einschalten des Elektromotors verhindert wird, wenn irgendwelche Fehlreaktionen oder Fehlsignale festgestellt werden. Fehler werden daher sofort erkannt und nicht erst bei einem durch sie verursachten Unfall. Der jeweils sehr schnell durchzuführende Test führt zu keinerlei Beeinträchtigung des Komforts und wird im Normalfall gar nicht bemerkt. Auf einfache und schnelle Weise kann dabei die korrekte Wirkung aller möglicher auftretender Abschalt- und/oder Steuersignale auf die Steuervorrichtung überprüft werden. Dabei wir die Selbsttesteinrichtung durch Einschaltsignale für den Elektromotor vor dessen Einschalten aktiviert. Hierdurch dient zum einen das Einschaltsignal für den Elektromotor gleichzeitig als Auslösesignal für die Selbsttesteinrichtung, und zum anderen erfolgt der Selbsttest kurz vor dem Einschalten des Elektromotors, so daß eventuell aufgetretene Defekte sicher erkannt werden können.

Eine mehrfache Sicherheit des Selbsttests wird dadurch erreicht, daß die Prüfeinrichtung Mittel zum Überprüfen der an den Abschalt- und/oder Steuersignaleingängen anliegenden Ruhezustands-Signale vor und/oder nach der Erzeugung der simulierten Abschalt- und/oder Steuersignale aufeist. Vorzugweise weist dabei die Selbsttesteinrichtung drei Prüfphasen auf, wobei die erste Prüfphase zur Überprüfung der Ruhezustands-Signale vor Erfassung der simulierten Signale, die zweite Prüfphase zur Überprüfung der Reaktion auf die simulierten Signale und die dritte Prüfphase zur Überprüfung der Ruhezustands-Signale nach dem Wiederabschalten der simulierten Signale vorgesehen ist. Mit großer Sicherheit kann dabei zwischen echten Abschalt- und/oder Steuersignalen und Fehlern in der Steuerung unterschieden werden.

Die Prüfeinrichtung weist zur Überprüfung der Reaktion auf die simulierten Signale und/oder der Ruhezustands- Signale nach dem Ein- und/oder Wiederabschalten der simulierten Abschalt- und/oder Steuersignale eine Zeitfenster-Überwachungseinrichtung auf, wobei Mittel zur Erzeugung eines Fehlersignals bei nicht innerhalb des Zeitfensters eingestellten Reaktionen auf die simulierten Signale und/oder wiederhergestellten Ruhezustands-Signalen vorgesehen sind.

Die Signalerzeugerstufe wird zweckmäßigerweise durch Testsignale der zentralen Steuereinheit ein- und ausgeschaltet, wobei diese zentrale Steuereinheit vorzugsweise als Mikrorechner ausgebildet ist. Die Prüfeinrichtung ist zweckmäßigerweise Bestandteil der zentralen Steuereinheit bzw. des Mikrorechners.

Um zusätzlich einen aufgetretenen Fehler kenntlich zu machen, ist eine mit der Abschaltvorrichtung gekoppelte optische und/oder akustische Warneinrichtung zum Anzeigen einer Fehlfunktion vorgesehen.

### ZEICHNUNG

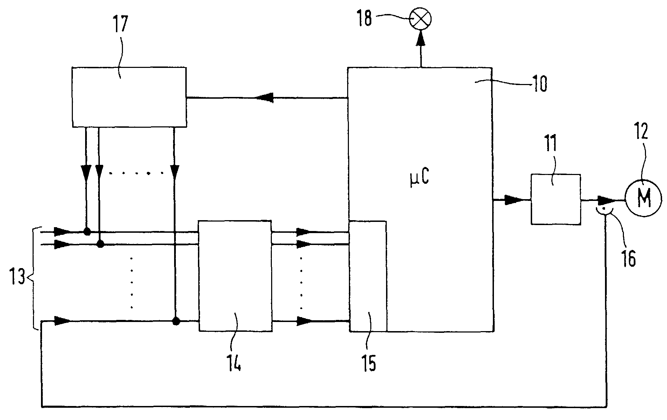

Ein Ausführungsbeispiel der Erfindung ist in der Zeichnung dargestellt und in der nachfolgenden Beschreibung näher erläutert. Die einzige Figur zeigt ein Blockschaltbild einer derartigen Steuervorrichtung zur Steuerung eines Elektromotors.

### BESCHREIBUNG DES AUSFÜHRUNGSBEISPIELS

Ein Mikrocomputer 10 steuert über eine Treiberstufe 11 einen Elektromotor 12. Dieser Elektromotor 12 dient einer elektrischen Antriebssteuerung für ein Garagentor oder ein anderes Tor, ein Fenster, eine Maschine oder ein Maschinenteil, eine Hubvorrichtung, ein Flurfördergerät o.dgl. Anstelle eines Mikrocomputers kann selbstverständlich auch eine herkömmliche elektronische Steuereinheit treten.

Zur Steuerung des Elektromotors 12 dienen Abschalt- und Steuersignale, die dem Mikrocomputer 10 über Abschalt- und Steuerleitungen 13 über eine Eingangssignal-Anpassungsstufe 14 zugeführt werden. Dort werden sie in einer Auswerte- und Prüfstufe 15 ausgewertet und in direkte Steuersignale für den Elektromotor 12 umgewandelt. Eines dieser Steuersignale ist ein motorstromabhängiges Signal, das mittels einer Strommeßvorrichtung 16 erfaßt wird. Eine Abschaltung des Elektromotors 12 in Abhängigkeit dieses Signals kann beispielsweise gemäß dem eingangs angegebenen Stand der Technik dadurch erfolgen, daß eine Abschaltung bei Überschreitung eines vorgegebenen Stromwerts erfolgt. Andere Abschalt- oder Steuersignale sind beispielsweise Signale einer Lichtschranke, eines Türkontakts, eines Endschalters, eines Bewegungsmelders, eines Druckwellenschlauchs im Dichtungsbereich einer Tür, einer Ultraschallmeßvorrichtung oder dergleichen. Diese Einrichtungen dienen zur Sicherheitsüberwachung des elektromotorischen Antriebs, wobei durch sie ausgelöste Signale im allgemeinen zum Abschalten des Elektromotors führen bzw. führen sollen.

Zu den funktionswirksamen Teilen einer Selbsttesteinrichtung gehört neben dem Mikrocomputer 10 und der Eingangssignal-Anpassungsstufe 14 im wesentlichen noch eine Signalerzeugerstufe 17. Im Betrieb werden durch den Mikrocomputer 10 Testsignale der Signalerzeugerstufe 17 zugeführt, die daraufhin simulierte Abschalt- bzw. Steuersignale den Eingängen der Eingangs-Anpassungsstufe 14 zuführt. Diese Abschalt- bzw. Steuersignale können selbstverständlich auch bereits im Mikrorechner 10 erzeugt und in der Signalerzeugerstufe 17 lediglich auf den erforderlichen Signalpegel angehoben werden.

Ein Prüfzyklus setzt sich aus drei Prüfphasen zusammen. Erhält der Elektromotor 10 ein Einschaltsignal, beispielsweise durch eine nicht dargestellte Fernsteuerung oder einen Schlüsselschalter, so wird zunächst das Einschalten verzögert, und in einer ersten Prüfphase werden die an der Auswerte- und Prüfstufe 15 anliegenden Signale daraufhin überprüft, ob es sich um ordnungsgemäße Ruhezustands-Signale handelt, also ob Signale von nicht aktivierten Sicherheitseinrichtungen anliegen. Ist dies der Fall, so erzeugt der Mikrorechner 10 in einer zweiten Prüfphase Testsignale für die Signalerzeugerstufe 17, die daraufhin simulierte Abschalt- und/oder Steuersignale den Eingängen der Eingangs-Anpassungsstufe 14 zuführt. Diese Signale müßten im Mikrorechner 10 zugeordnete Abschalt- bzw. Steuersignale für den Elektromotor 12 erzeugen. Die korrekte Erzeugung dieser Signale innerhalb eines Zeitfensters wird überprüft. Danach schaltet der Mikrorechner 10 in einer dritten Prüfphase die Testsignale wieder ab, und die Auswerte- und Prüfstufe 15 prüft, ob innerhalb eines vorgegebenen Zeitfensters wieder die Ruhezustands- Signale anliegen. Ist auch dies der Fall, so wird die Einschaltung des Elektromotors 12 freigegeben. Tritt während des Prüfablaufs ein Fehler auf, so wird selbstverständlich der gesamte Prüfablauf abgebrochen, und der Elektromotor 12 bleibt blockiert. Gleichzeitig wird eine Warnleuchte 18 eingeschaltet, um auf den aufgetretenen Fehler aufmerksam zu machen. Alternativ oder zusätzlich zur Warnleuchte 18 kann auch eine akustische Warneinrichtung treten.

Um zu verhindern, daß der Elektromotor 12 durch einen zufällig aufgetretenen Fehlimpuls deaktiviert bleibt, kann der Prüfdurchlauf beim Auftreten eines Fehlers auch wiederholt werden, wobei erst nach einer vorgegebenen Zahl von Prüfdurchläufen eine endgültige Abschaltung bzw. Blockierung erfolgt.

## Patentansprüche

1. Elektronische Steuervorrichtung für einen elektromotorischen Antrieb, insbesondere Garagentorantrieb, mit einer eien Elektromotor (12) steuernden zentralen Steuereinheit (10, 14, 15), der Abschalt- und/oder Steuersignale von den Antrieb überwachenden Einrichtungen (16) zugeführt sind, gekennzeichnet durch eine Selbsttesteinrichtung, welche durch Einschaltsignale für den Elektromotor (12) vor dessen Einschalten aktivierbar ist, mit einer Abschalt- und/oder Steuersignale simulierenden Signalerzeugerstufe (17), einer die diesen Abschalt- und/oder Steuersignalen zugeordnete Reaktion in der zentralen Steuereinheit überprüfenden Prüfeinrichtung (15) und einer den Elektromotor (12) beim Auftreten wenigstens einer Fehlreakion oder eines Fehlersignals blockierende Abschaltvorrichtung.

2. Steuervorrichtung nach Anspruch 1, dadurch gekennzeichnet, daß die Prüfeinrichtung (15) Mittel zum Überprüfen der an den Abschalt- und/oder Steuersignaleingängen (13) anliegenden Ruhezustands-Signale vor und/oder nach der Erzeugung der simulierten Abschalt- und/oder Steuersignale aufweist.

3. Steuervorrichtung nach Anspruch 2, dadurch gekennzeichnet, daß die Selbsttesteinrichtung drei Prüfphasen aufweist, wobei die erste Prüfphase zur Überprüfung der Ruhezustands-Signale vor Erzeugung der simulierten Signale, die zweite Prüfphase zur Überprüfung der Reaktion auf die simulierten Signale und die dritte Prüfphase zur Überprüfung der Ruhezustands-Signale nach Wiederabschalten der simulierten Signale vorgesehen ist.

4. Steuervorrichtung nach Anspruch 2 oder 3, dadurch gekennzeichnet, daß die Prüfeinrichtung (15) zur Überprüfung der Reaktion auf die simulierten Signale und/oder Steuersignale eine Zeitfenster-Überwachungseinrichtung aufweist, und daß Mittel zur Erzeugung eines Fehlersignals bei nicht innerhalb des Zeitfensters eingestellten Reaktionen auf die simulierten Signale und/oder die wiederhergestellten Ruhezustands-Signalen vorgesehen sind.

5. Steuervorrichtung nach einem der vorhergehenden Ansprüche, dadurch gekennzeichnet, daß die Signalerzeugerstufe (17) durch Testsignale der zentralen Steuereinheit (10) ein- und ausschaltbar ist.

6. Steuervorrichtung nach einem der vorhergehenden Ansprüche, dadurch gekennzeichnet, daß die Prüfeinrichtung (15) Bestandteil der zentralen Steuereinheit (10) ist.

7. Steuervorrichtung nach einem der vorhergehenden Ansprüche, dadurch gekennzeichnet, daß die zentrale Steuereinheit (10) als Mikrorechner ausgebildet ist.

8. Steuervorrichtung nach einem der vorhergehenden Ansprüche, dadurch gekennzeichnet, daß eine mit der Abschaltvorrichtung gekoppelte optische und/oder akustische Warneinrichtuung (18) zum Anzeigen einer Fehlfunktion vorgesehen ist.

9. Steuervorrichtung nach einem der vorhergehenden Ansprüche, dadurch gekennzeichnet, daß der zentralen Steuereinheit (10) eine Eingangssignal-Anpassungsstufe (14) für die Abschalt- und/oder Steuersignale vorgeschaltet ist.

## Claims

1. Electronic control device for an electromotive drive, in particular garage door drive, having a central control unit (10, 14, 15), which controls an electric motor (12) and to which deactivation signals and/or control signals are fed by devices (16) which monitor the drive, characterized by a self-test device, which can be activated by activation signals for the electric motor (12) before it is actuated, having a signal generator stage (17), which simulates deactivation and/or control signals, a test device (15) which checks, in the central control unit, the reaction associated with these deactivation and/or control signals, and a deactivation device, which blocks the electric motor (12) when at least one incorrect reaction or an error signal occurs.

2. Control device according to Claim 1, characterized in that the test device (15) has means for checking the idle-state signals, present at the deactivation signal and/or control signal inputs (13), before and/or after the generation of the simulated deactivation signals and/or control signals.

3. Control device according to Claim 2, characterized in that the self-test device has three test phases, the first test phase being provided for checking the idle-state signals before the generation of the simulated signals, the second test phase being provided for checking the reaction to the simulated signals and the third test phase being provided for checking the idle-state signals after the simulated signals have been deactivated again.

4. Control device according to Claim 2 or 3, characterized in that the test device (15) for checking the reaction to the simulated signals and/or control signals has a time-window monitoring device, and in that means are provided for generating an error signal when the reactions to the simulated signals and/or the restored idle-state signals do not occur within a time window.

5. Control device according to one of the preceding claims, characterized in that the signal generator stage (17) can be activated and deactivated by means of test signals of the central control unit (10).

6. Control device according to one of the preceding claims, characterized in that the test device (15) is a component of the central control unit (10).

7. Control device according to one of the preceding claims, characterized in that the central control unit (10) is designed as a microcomputer.

8. Control device according to one of the preceding claims, characterized in that a visual and/or acoustic warning device (18) which is coupled to the deactivation device is provided for displaying a malfunction.

9. Control device according to one of the preceding claims, characterized in that an input-signal adaptation stage (14) for the deactivation signals and/or control signals is connected upstream of the central control unit (10).

## Revendications

1. Dispositif électronique de commande pour un mécanisme d'entraînement à moteur électrique, en particulier pour un mécanisme d'entraînement de porte de garage, comprenant une unité de commande centrale (10, 14, 15) qui commande un moteur électrique (12), unité de commande à laquelle sont amenés des signaux de débranchement et/ou de commande provenant de dispositifs (16) de contrôle du mécanisme d'entraînement ,
caractérisé par
un système de contrôle automatique, qui peut être activé par des signaux de mise en marche pour le moteur électrique (12) avant sa mise en marche, avec un étage de productions de signaux (17), qui simule des signaux de débranchement et/ou de commande, un dispositif de contrôle (15), qui contrôle la réaction dans l'unité de commande centrale associée à ces signaux de débranchement et/ou de commande et avec un dispositif de débranchement, qui bloque le moteur électrique (12), lorsqu'il se produit au moins une réaction d'erreur ou un signal d'erreur.

2. Dispositif de commande selon la revendication 1,
caractérisé en ce que
le dispositif de contrôle (15) présente des moyens qui servent à contrôler des signaux d'état de repos se trouvant aux entrées (13) des signaux de débranchement et/ou de commande avant et/ou après la production des signaux de débranchement et/ou de commande simulés.

3. Dispositif de commande selon la revendication 2,
caractérisé en ce que
le système automatique de contrôle présente trois phases de contrôle, la première phase de contrôle étant prévue pour contrôler les signaux d'état de repos avant la production des signaux simulés, la deuxième phase de contrôle étant prévue pour contrôler la réaction sur les signaux simulés, et la troisième phase de contrôle étant prévue pour contrôler les signaux d'état de repos après le nouveau débranchement des signaux simulés.

4. Dispositif de commande selon la revendication 2 ou 3,
caractérisé en ce que
• le dispositif de contrôle (15) présente pour contrôler la réaction sur les signaux simulés et/ou sur les signaux de commande un dispositif de contrôle à fenêtre de temps et
• l'on prévoit des moyens pour produire un signal d'erreur lors de réactions, n'ayant pas été réglées à l'intérieur de la fenêtre de temps, sur les signaux simulés et/ou sur les signaux d'état de repos produits à nouveau.

5. Dispositif de commande selon l'une des revendications précédentes,
caractérisé en ce que
l'étage de production de signaux (17) peut être branché et débranché par des signaux d'essai de l'unité centrale de commande (10).

6. Dispositif de commande selon l'une des revendications précédentes,
caractérisé en ce que
le dispositif de contrôle (15) est une partie constituante de l'unité centrale de commande (10).

7. Dispositif de commande selon l'une des revendications précédentes,
caractérisé en ce que
l'unité centrale de commande (10) est constituée sous la forme d'un micro-calculateur.

8. Dispositif de commande selon l'une des revendications précédentes,
caractérisé en ce que
l'on prévoit un dispositif avertisseur (18) optique et/ou acoustique, couplé avec le dispositif de débranchement, pour indiquer un défaut de fonctionnement.

9. Dispositif de commande selon l'une des revendications précédentes,
caractérisé en ce que
l'on monte en amont de l'unité centrale de commande (10) un étage d'adaptation des signaux d'entrée (14) pour les signaux de débranchement et/ou de commande.
